# EUROPEAN PATENT SPECIFICATION

(11) **EP 2 851 583 B1**
(45) Date of publication and mention of the grant of the patent: **27.04.2016**
(21) Application number: 14180357.7
(22) Date of filing: 08.08.2014
(51) Int. Cl.: F16H 61/00, B60K 6/48, F16D 11/10

(54) **Automatic transmission apparatus**
Automatikgetriebevorrichtung
Appareil de transmission automatique

(30) Priority: 18.09.2013 JP 2013193317
(43) Date of publication of application: 25.03.2015
(73) Proprietor: AISIN SEIKI KABUSHIKI KAISHA, Kariya-shi, Aichi 448-8650 (JP)
(72) Inventor: Harada, Shinya, Kariya-shi, Aichi 448-8650 (JP); Misu, Takahiro, Kariya-shi, Aichi 448-8650 (JP)
(74) Representative: Kramer Barske Schmidtchen Patentanwälte PartG mbB

(56) References cited:
- JP-A- H01 312 254
- JP-A- 2010 096 190

## Description

This disclosure relates to an automatic transmission apparatus.

Some vehicles have a parking mechanism used when the vehicle is stopped for maintaining a stopped state. For example, among vehicles having an automatic transmission, those having the parking mechanism configured to switch an output shaft of the automatic transmission between a locked state which prohibits rotation and an unlocked state which allows rotation are known (e.g. JP4400652B).

The parking mechanism provided on the automatic transmission is generally configured to move a position of a movable claw member for parking provided on a vehicle body side by an actuator or the like and realize the locked state engaging a parking gear fixed to the output shaft of the automatic transmission and an unlocked state being disengaged therewith. Alternatively JP H01 312254 A discloses a parking mechanism in accordance with the preamble of claim 1, wherein two pairs of gears of a transmission are simultaneously engaged to thereby lock a driving shaft. In the field of vehicles, a reduction in size, simplification, a reduction in cost, and the like of components are required. Therefore, the parking mechanism is preferably reviewed as one of means of realizing such requirements.

An automatic transmission apparatus related to an embodiment disclosed here includes: a plurality of first gears provided on a first shaft; a plurality of second gears provided on a second shaft and configured to engage with any one of the first gears to constitute gear pairs having different gear ratio; a switching mechanism configured to switch a transmission of each of the gear pairs between a transmitting state in which a torque is transmitted between the first shaft and the second shaft and a non-transmitting state in which the torque is not transmitted via the gear pair; and a gear control unit configured to control the switching mechanism while the vehicle is stopped, and switch at least two gear pairs to the transmitting state. In this configuration, by controlling at least two gear pairs having different gear ratio into the transmitting state which allows torque transmission, the first shaft and the second shaft are brought into a locked state in which relative rotation cannot be performed due to the difference in gear ratio between at least the two gear pairs. In other words, a parking state in which neither of the first shaft or the second shaft can rotate is achieved. Consequently, the automatic transmission apparatus having a parking function is achieved although a specific configuration for parking is omitted, so that a reduction in size, simplification, and a reduction in cost of the automatic transmission apparatus are achieved.

The switching mechanism of the automatic transmission apparatus according to the embodiment disclosed here further includes a clutch ring supported so as to be rotatable about an axis of at least one of the first shaft and the second shaft and configured to concentrically fix the first gears or the second gears so as to be rotatable; a hub fixed to the first shaft or the second shaft and configured to support the clutch ring; a sleeve configured to fit the hub so as to be movable on the first shaft or the second shaft having the hub fixed thereto in an axial direction; and a movable mechanism configured to move the sleeve in the axial direction. The clutch ring is provided so as to project toward the sleeve and includes dog teeth capable of engaging a spline formed on the sleeve by the movement of the sleeve in the axial direction. In this configuration, the parking function is realized by using a so-called dog clutch, which has a potential of realization of reduction in size, simplification, and reduction in cost, and thereby, reduction in size, simplification and reduction in cost of the automatic transmission apparatus is achieved as a consequence.

At least one of the gears which constitute the gear pairs of the automatic transmission apparatus of the embodiment disclosed here may be configured to be rotatable by an external supply torque when the vehicle is stopped. The external supply torque may be supplied, for example, by using a motor. The external supply torque may also be supplied by an internal combustion engine connected to the automatic transmission apparatus via a clutch, for example. In this configuration, even when the teeth phases of the spline of the sleeve and the clutch ring are aligned and hence cannot engage with each other, the phase can be changed, so that the spline and the teeth of the clutch ring can engage with each other.

The spline of the automatic transmission apparatus according to the embodiment disclosed here may include: a plurality of high teeth and a plurality of low teeth having a lower height than the high teeth, and the dog teeth may include clutch front teeth including the same number of teeth as the high teeth and having an outer diameter larger than an inner diameter of the high teeth and smaller than an inner diameter of the low teeth, and a clutch rear teeth capable of engaging with tooth grooves on the spline and formed at positions retracted from the clutch front teeth in the direction away from the hub. In this configuration, the high teeth of the spline of the sleeve engage with the clutch front teeth of the clutch ring, and then the low teeth of the spline and the clutch rear teeth of the clutch ring engage with each other. In other words, at the time when the high teeth and the clutch front teeth engage, there is a play in engagement. Consequently, engagement at the time of switching the transmitting state among the plurality of gear pairs is easily achieved.

The gear control unit of the automatic transmission apparatus of the embodiment disclosed here may be configured to control the movable mechanism of the switching mechanism to cause the spline and the dog teeth to engage with each other according to a predetermined priority under the conditions that the vehicle satisfies predetermined parking conditions. In this configuration, engagement between the spline and the clutch ring may be achieved efficiently.

In the automatic transmission apparatus of the embodiment disclosed here, the predetermined parking conditions may be that the remaining spline and dog teeth engage with each other on the premise that the vehicle is stopped with the spline corresponding to the low-speed side gear pair out of the gear pairs and the dog teeth engaging with each other. In this configuration, since engagement between the spline corresponding to the low-speed side gear pair having a higher likelihood of being in engagement when the vehicle is stopped and the dog teeth is utilized, control time until the parking state is established may be shortened.

The gear control unit of the automatic transmission apparatus according to the embodiment disclosed here may be configured to adjust the engagement state by rotating at least one of the gears which constitute the gear pairs configured to switch the transmitting state according to the predetermined priority if the engagement between the spline and the dog teeth is not established. In this configuration, even when the spline of the sleeve and the dog teeth of the clutch ring are aligned in phase and hence cannot engage, the phase is changed according to the priority. Therefore, the spline and the dog teeth can be engaged efficiently.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic drawing illustrating a configuration of an automatic transmission apparatus according to an embodiment;
Fig. 2 is a drawing illustrating a configuration of a dog clutch which constitutes part of the automatic transmission apparatus of the embodiment;
Fig. 3 is a flowchart showing control performed by a gear control unit of the automatic transmission apparatus of the embodiment, and is a part of a flowchart showing a principal flow;
Fig. 4 is a part of the flowchart of the automatic transmission apparatus of the embodiment carrying on from the flowchart in Fig. 3;
Fig. 5 is a part of the flowchart of the automatic transmission apparatus of the embodiment carrying on from the flowchart in Fig. 4;
Fig. 6 is a part of the flowchart of the automatic transmission apparatus of the embodiment carrying on from the flowchart in Fig. 5;
Fig. 7 is a part of the flowchart of the automatic transmission apparatus of the embodiment carrying on from the flowchart in Fig. 3; and
Fig. 8 is a part of the flowchart of the automatic transmission apparatus of the embodiment carrying on from the flowchart in Fig. 3.

### DETAILED DESCRIPTION

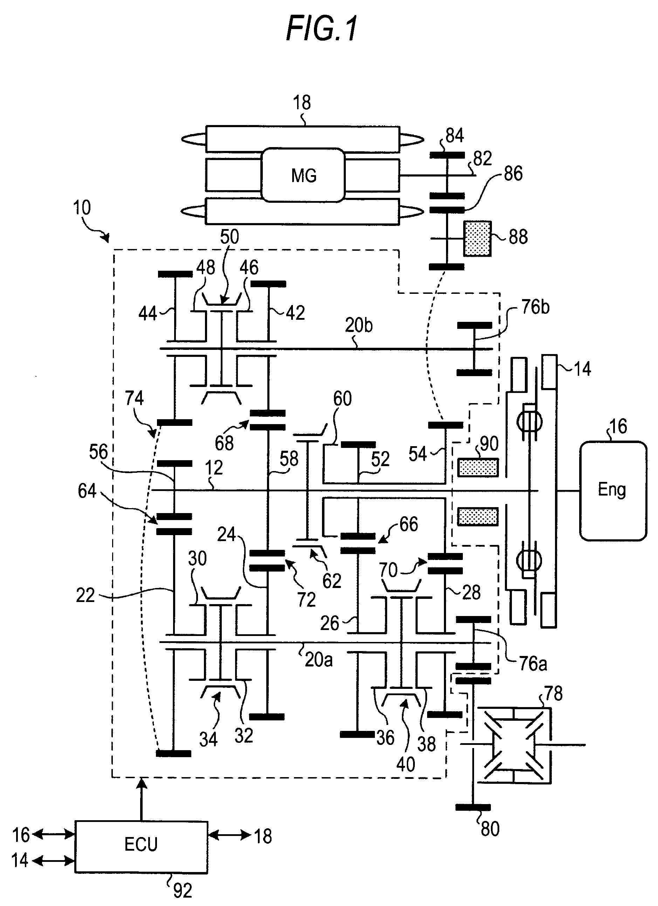

Fig. 1 is a schematic drawing illustrating a configuration centered on an automatic transmission apparatus (for example, automated transmission apparatus) 10 according to an embodiment. In the case of an exemplified configuration illustrated in Fig. 1, motive power of an internal combustion engine (for example, gasoline engine) 16 and motive power of a motor generator 18 are supplied to an input shaft 12 of the automatic transmission apparatus 10, for example, via a dry-type clutch 14. In other words, the automatic transmission apparatus 10 of the embodiment is mounted on a hybrid vehicle.

The automatic transmission apparatus 10 of the embodiment is a transmission having no synchronous mesh mechanism but an engaging mechanism referred to as "dog clutch" instead, and a plurality of gears being always in the engaged state. In this manner the automatic transmission apparatus including the dog clutch may be referred to as "dog transmission". Fig. 1 illustrates an example of the dog transmission. The automatic transmission apparatus 10 of the embodiment is an example including one input shaft 12 and two output shafts 20a and 20b. The input shaft 12 of the embodiment may be referred to as a first shaft. The output shafts 20a and 20b may be referred to as second shafts.

The output shaft 20a supports a first driven gear 22, a fifth driven gear 24, a second driven gear 26, and a fourth driven gear 28 rotatably on the shaft thereof. The output shaft 20a includes a first dog 30 configured to switch the transmission between a transmitting state (torque transmitting state) in which a torque is transmitted by fixing the first driven gear 22 to the output shaft 20a and a non-transmitting state (non-torque-transmitting state) in which the fixation is released and hence the torque cannot be transmitted. In the same manner, the output shaft 20a includes a fifth dog 32 configured to switch the transmission between the torque transmitting state in which the fifth driven gear 24 is fixed to the output shaft 20a and the non-torque-transmitting state in which the fixation is released. The output shaft 20a includes a first dog, clutch 34 configured to perform a switching operation to switch either one of the first dog 30 or the fifth dog 32 into the torque-transmitting state or both of the first dog 30 and the fifth dog 32 into the non-torque-transmitting state. In the same manner, the output shaft 20a includes a second dog 36 configured to switch the transmission between the torque-transmitting state in which the second driven gear 26 is fixed to the output shaft 20a and the non-torque-transmitting state in which the fixation is released, and a fourth dog 38 configured to switch the transmission between the torque-transmitting state in which the fourth driven gear 28 is fixed to the output shaft 20a and the non-torque-transmitting state in which the fixation is released. The output shaft 20a includes a second dog clutch 40 configured to perform a switching operation to switch either one of the second dog 36 or the fourth dog 38 into the torque-transmitting state or both of the second dog 36 and the fourth dog 38 into the non-torque-transmitting state.

The output shaft 20b supports a third driven gear 42, and a driven gear for reverse travel 44 rotatably on the shaft thereof. The output shaft 20b includes a third dog 46 configured to switch the transmission between the torque transmitting state in which the third driven gear 42 is fixed to the output shaft 20b, and the non-torque-transmitting state in which the fixation is released. In the same manner, the output shaft 20b includes a dog for reverse travel 48 configured to switch the transmission between the torque transmitting state in which the driven gear for reverse travel 44 is fixed to the output shaft 20b and the non-torque-transmitting state in which the fixation is released. The output shaft 20b includes a third dog clutch 50 configured to perform a switching operation to switch either one of the third dog 46 and the dog for reverse travel 48 into the torque-transmitting state or both of them into the non-torque-transmitting state.

The input shaft 12 includes a second drive gear 52, a fourth drive gear 54, a first/reverse travel drive gear 56, and a third/fifth drive gear 58. In the configuration of this embodiment, the first/reverse travel drive gear 56 and the third/fifth drive gear 58 are fixed to the input shaft 12. In contrast, the second drive gear 52 and the fourth drive gear 54 are rotatably supported on the input shaft 12. In the configuration of the embodiment, the second drive gear 52 and the fourth drive gear 54 are integrated so that both can rotate upon reception of a power transmission of the motor generator 18 with the fourth drive gear 54, and can rotate integrally with the input shaft 12. In contrast, the input shaft 12 includes a fourth dog clutch 62 configured to perform a switching operation provided with an A dog 60 configured to switch the transmission between the torque-transmitting state in which the second drive gear 52 is fixed to the input shaft 12, and the non-torque-transmitting state in which the fixation is released. Therefore, when the A dog 60 is engaged with the second drive gear 52 by the fourth dog clutch 62, both of the second drive gear 52 and the fourth drive gear 54 are fixed to the input shaft 12. In this embodiment, drive gears provided on the input shaft 12 may be referred to as first gears, and driven gears provided on the output shafts 20a and 20b may be referred to as second gears.

In the case of the automatic transmission apparatus 10 in Fig. 1, the first driven gear 22 and the first/reverse travel drive gear 56 constitute a first gear pair 64, the second driven gear 26 and the second drive gear 52 constitute a second gear pair 66, and the third driven gear 42 and the third/fifth drive gear 58 constitute a third gear pair 68. The fourth driven gear 28 and the fourth drive gear 54 constitute a fourth gear pair 70, and the fifth driven gear 24 and the third/fifth drive gear 58 constitute a fifth gear pair 72. The driven gear for reverse travel 44 constitutes a pair with the first/reverse travel drive gear 56 via the first driven gear 22 and constitutes a reverse travel gear pair 74.

In this manner, the first dog clutch 34, the second dog clutch 40, the third dog clutch 50, and the fourth dog clutch 62 function as switching mechanisms for switching the transmission between the torque-transmitting state and the non-torque-transmitting state between the first shaft (for example, the input shaft 12) and the second shaft (for example, the output shaft 20a or the output shaft 20b) according to gear ratios determined from one gear pair to another via the first gear pair 64, the second gear pair 66, the third gear pair 68, the fourth gear pair 70, the fifth gear pair 72, and the reverse travel gear pair 74. For example, the first driven gear 22 which has been rotatable by engaging the first dog 30 with the first driven gear 22 by the first dog clutch 34 is fixed to the output shaft 20a. Since the first/reverse travel drive gear 56 is fixed to the input shaft 12, the first gear pair 64 is brought into the torque-transmitting state between the input shaft 12 and the output shaft 20a in accordance with a predetermined gear ratio. In contrast, when the engagement between the first dog 30 and the first driven gear 22 is released by the first dog clutch 34, the first driven gear 22 is rotatable with respect to the output shaft 20a. Therefore, even though the first driven gear 22 is rotated by the first/reverse travel drive gear 56 fixed to the input shaft 12, the first/reverse travel drive gear 56 only idles on the output shaft 20a, whereby the first gear pair 64 is brought into the non-torque-transmitting state between the input shaft 12 and the output shaft 20a.

Output gears 76a and 76b are fixed to the output shafts 20a and 20b of the automatic transmission apparatus 10, respectively, and engage with a ring gear 80 of a differential apparatus 78, and a torque of the output shafts 20a and 20b is transmitted to the ring gear 80.

An output gear 84 fixed to an output shaft 82 of the motor generator 18 engages with the fourth drive gear 54 via an idle gear 86. Therefore, the motor generator 18 is capable of rotating the fourth drive gear 54 and the second drive gear 52 simultaneously. In Fig. 1, the idle gear 86 includes a rotation sensor 88, detects a real number of rotations of the motor generator 18, and utilizes the number of rotations for controlling the motor generator 18. A concentric slave cylinder (CSC) 90 configured to press a clutch cover of the clutch 14 is provided on the input shaft 12.

The automatic transmission apparatus 10 is provided with an electronic control unit (ECU) 92 configured to control the automatic transmission apparatus 10. The ECU 92 functions as a gear control unit configured to control the first dog clutch 34, the second dog clutch 40, the third dog clutch 50, and the fourth dog clutch 62, and switch the transmission between the torque-transmitting state and the non-torque-transmitting state. The ECU 92 may be configured as an integrative ECU configured to perform control of the clutch 14, the motor generator 18, the internal combustion engine 16, and the like integrally. In contrast, in the modification, a mutual control between ECUs may be performed by providing a clutch ECU configured to control the clutch 14, a motor ECU configured to control the motor generator 18, and an engine ECU configured to control the internal combustion engine 16 individually. An HVECU in which the engine ECU and the motor ECU are integrated may be provided.

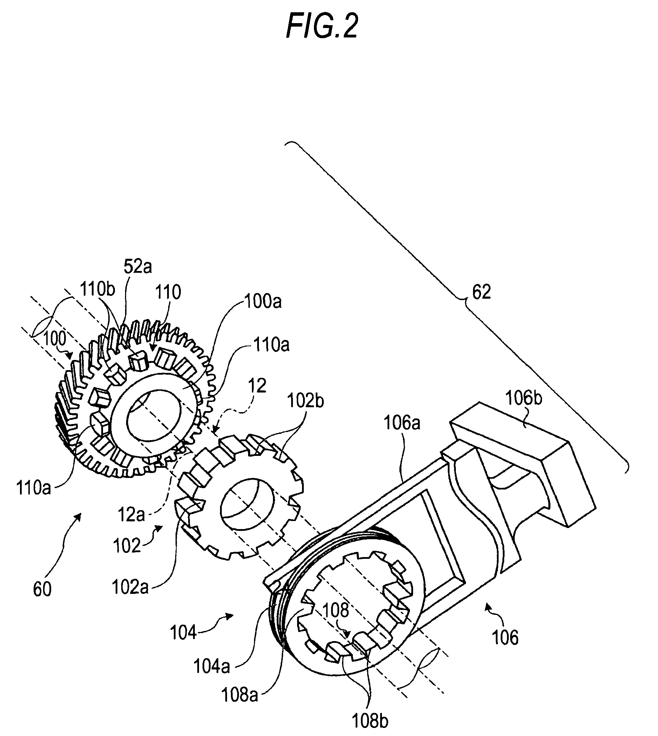

Fig. 2 is a perspective view for explaining the configuration of the dog clutch.

As described above, the dog clutch functions as a switching mechanism configured to switch the transmission between the torque-transmitting state and the non-torque-transmitting state between the first shaft (for example, the input shaft 12) and the second shaft (for example, the output shaft 20a) via the gear pair as a control object. The dog clutch includes the clutch ring, the hub, the sleeve, and a movable mechanism configured to move the sleeve. The clutch ring is supported so as to be rotatable about at least one of the first shaft and the second shaft, and fixes the first gears or the second gears concentrically so as to be capable of rotating. The hub is fixed to the first shaft or the second shaft configured to support the clutch ring. The sleeve fits to the hub so as to be movable in the axial direction on the first shaft or the second shaft to which the hub is fixed. A movable mechanism 106 moves the sleeve in the direction of the axis of the first shaft or the second shaft. Then, the clutch ring includes a dog teeth provided so as to protrude toward the sleeve and configured to engage with the spline formed on the sleeve by a movement of the sleeve in the axial direction.

Referring now to Fig. 2, a detailed structure of the dog clutch will be described. Since the basic configurations of the first dog clutch 34, the second dog clutch 40, the third dog clutch 50, and the fourth dog clutch 62 illustrated in Fig. 1 are the same, the fourth dog clutch 62 will be described as a representative in conjunction with Fig. 2.

The fourth dog clutch 62 performs transmission between the torque-transmitting state and the non-torque-transmitting state of the A dog 60 in Fig. 1. A clutch ring 100 which constitutes the fourth dog clutch 62 is rotatably supported around the input shaft 12, and a hub 102 is fixed around the input shaft 12. A sleeve 104 is fitted to an outer peripheral surface of the hub 102 so as to be movable on the outer peripheral surface of the hub 102 in a direction of an axial line 12a of the input shaft 12 by a movable member (for example, a fork member 106a) which constitutes part of the movable mechanism 106. A groove 104a is formed on an outer peripheral surface of the sleeve 104 in a circumferential direction to receive the fork member 106a. In other words, even when the sleeve 104 rotates about the input shaft 12, the sleeve 104 may be moved along the outer peripheral surface of the hub 102 in the direction of the axial line 12a. The fork member 106a is driven by an actuator 106b.

In this embodiment, a gear 52a of the second drive gear 52 is formed on an outer peripheral surface of the clutch ring 100. A dog teeth 110 configured to engage with a spline 108 formed on the sleeve 104 is formed on a side surface of the clutch ring 100 on the hub 102 side. The dog teeth 110 includes clutch front teeth 110a and a clutch rear teeth 110b formed on an outer peripheral surface of a projecting portion 100a protruding in a ring shape on the side surface of the clutch ring 100. The two clutch front teeth 110a are provided on the outer peripheral surface of the projecting portion 100a at positions, for example, 180 degrees apart from each other. On the other hand, for example, five of the clutch rear teeth 110b are provided equidistantly between the two clutch front teeth 110a. In other words, twelve in total of the clutch front teeth 110a and the clutch rear teeth 110b are formed equidistantly on the outer peripheral surface of the projecting portion 100a as the dog teeth 110. As described above, the spline 108 engaging with the dog teeth 110 is formed on an inner peripheral surface of the ring-shaped sleeve 104. Therefore, the spline 108 includes twelve tooth grooves. The spline 108 includes high teeth 108a and low teeth 108b. Two of the high teeth 108a are provided on the inner peripheral surface of the sleeve 104 at positions, for example, 180 degrees apart from each other. In contrast, for example, five of the low teeth 108b are provided equidistantly between the two high teeth 108a. In other words, twelve in total of the high teeth 108a and the low teeth 108b are arranged equidistantly to form the spline 108 engaging with the dog teeth 110 formed equidistantly. The sleeve 104 fits on the outer peripheral surface of the hub 102 so as to be movable in the direction of the axial line 12a. Therefore, two deep grooves 102a having a shape corresponding to the high teeth 108a of the sleeve 104 are formed at positions 180 degree apart from each other so as to be capable of receiving the high teeth 108a of the sleeve 104, and shallow grooves 102b having a shape corresponding to the low teeth 108b is formed equidistantly at position between the two deep grooves 102a on the outer peripheral surface of the hub 102.

Here, a relationship among the clutch front teeth 110a, the clutch rear teeth 110b, the high teeth 108a, and the low teeth 108b is shown. The clutch front teeth 110a is formed to have an outer diameter larger than the inner diameter of the high teeth 108a and smaller than the inner diameter of the low teeth 108b. In contrast, the clutch rear teeth 110b is engageable with the teeth grooves of the spline 108 and are formed at a position retracted from the the clutch front teeth 110a in the direction away from the hub 102. With the respective teeth to have the height relationship therebetween, even though a difference between the rotational speeds of the clutch ring 100 and the sleeve 104 is present, the complete engagement therebetween may be achieved easily. As described above, since the clutch rear teeth 110b are formed at positions retracted from the clutch front teeth 110a, when the sleeve 104 moves on the outer peripheral surface of the hub 102 toward the clutch ring 100, the high teeth 108a of the sleeve 104 come into contact with the clutch front teeth 110a of the clutch ring 100 first. In this case, since the clutch front teeth 110a are formed at a distance of 180 degrees, even though there is significant difference in rotational speed between the clutch ring 100 and the sleeve 104, sufficient play is present between the respective teeth, so that the engagement between the clutch front teeth 110a and the high teeth 108a is easily achieved. The rotations of the clutch ring 100 and the sleeve 104 are synchronized by the engagement between the clutch front teeth 110a and the high teeth 108a. When the sleeve 104 moves on the hub 102 further toward the clutch ring 100, the clutch rear teeth 110b and the low teeth 108b formed equidistantly engage each other. In other words, the clutch ring 100 and the sleeve 104 engage completely each other. A mutual rotation of the sleeve 104 and the hub 102 is restricted and integrated by the engagement of the spline 108, and the hub 102 is fixed to the input shaft 12. Therefore, the clutch ring 100 is integrated with the input shaft 12 by a complete engagement between the clutch ring 100 and the sleeve 104. In other words, the second drive gear 52 integrated with the clutch ring 100 is fixed to the input shaft 12, and the transmission is switched from the non-torque-transmitting state to the torque-transmitting state in which the torque of the input shaft 12 can be transmitted to the second drive gear 52.

The fourth dog clutch 62 in Fig. 2 has a configuration in which the switching operation of the A dog 60 only, that is, a switching operation of a single dog is performed. However, the first dog clutch 34, the second dog clutch 40, and the third dog clutch 50 perform a switching operation between the torque-transmitting state and the non-torque-transmitting state for each of the two dogs. In this case, the clutch rings 100 are arranged on both sides of the hub 102. Then, the sleeve 104 is controlled to switch the state among three states, namely, a state moving toward the clutch ring 100 on the left side of the hub 102, a state of moving toward the clutch ring 100 on the right side of the hub 102, and a neutral state of being positioned on the hub 102 in out of contact with the both clutch rings 100. In the state of the first dog clutch 34, for example, the clutch ring 100 integrated with the first driven gear 22 is arranged on the left side of the hub 102, and the clutch ring 100 integrated with the fifth driven gear 24 is arranged on the right side of the hub 102. Therefore, when the sleeve 104 is moved toward the first driven gear 22 by a fork member 106a, the first driven gear 22 is fixed to the output shaft 20a, and when the sleeve 104 is moved toward the fifth driven gear 24, the fifth driven gear 24 is fixed to the output shaft 20a. When the sleeve 104 is moved to the neutral state by the fork member 106a, neither the first driven gear 22 nor the fifth driven gear 24 are fixed to the output shaft 20a. It is the same for the second dog clutch 40 and the third dog clutch 50.

As described above, the automatic transmission apparatus 10 is applied to the hybrid vehicle using the internal combustion engine 16 and the motor generator 18 as a drive source. A transmission state suitable for the traveling state is achieved by a drive control of the internal combustion engine 16 and the motor generator 18 by the ECU 92 and a switching control of the respective dogs. For example, either one of the first driven gear 22, the fifth driven gear 24, the second driven gear 26, and the fourth driven gear 28 is fixed to the output shaft 20a by either one of the first dog clutch 34 or the second dog clutch 40, or either one of the third driven gear 42 and the driven gear for reverse travel 44 is fixed to the output shaft 20b by the third dog clutch 50. Consequently, control using a drive force of at least one of the internal combustion engine 16 and the motor generator 18 is realized.

The automatic transmission apparatus 10 of the embodiment has options of not only a drive form using only the internal combustion engine 16 as a drive source when traveling the vehicle and a drive force using only the motor generator 18 as a drive source, but also a cooperative control mode using both of the internal combustion engine 16 and the motor generator 18 as the drive sources. Hereinafter, an example of the gear connection under the cooperative control will be described.

For example, an example of a motive power transmission in the case where the drive force of the internal combustion engine 16 is transmitted by using the first gear pair 64, the drive force of the motor generator 18 is transmitted by using the second gear pair 66, that is, in the case where a first gear travel is performed by the internal combustion engine 16 with an assist of the motor generator 18 will be described.

In this case, the internal combustion engine 16 and the motor generator 18 are brought into a driving state and the clutch 14 is brought into the connecting state. As regards the dog, the first dog 30 is switched to the torque-transmitting state by the first dog clutch 34, and the second dog 36 is switched to the torque transmitting state by the second dog clutch 40. Consequently, the torque of the internal combustion engine 16 is transmitted to the input shaft 12 via the clutch 14, and rotates the first/reverse travel drive gear 56 fixed to the input shaft 12. Then the first/reverse travel drive gear 56 rotates the first driven gear 22 fixed to the output shaft 20a by the first dog 30 and transmits the torque of the internal combustion engine 16 to the output shaft 20a in accordance with the gear ratio determined by the first gear pair 64. In contrast, by bringing the A dog 60 into the non-torque-transmitting state, the torque of the motor generator 18 is transmitted to the fourth drive gear 54 which is freely rotated in accordance with the predetermined gear ratio and further rotates the second drive gear 52 integrated therewith. The second drive gear 52 rotates the second driven gear 26. Since the second driven gear 26 is fixed to the output shaft 20a by the second dog 36, the torque of the motor generator 18 is transmitted to the output shaft 20a in accordance with the gear ratio of the gears in the route of transmission such as the second gear pair 66. Therefore, both the torque of the internal combustion engine 16 and the torque of the motor generator 18 are transmitted to the output shaft 20a, and the output gear 76a is rotated. The torque transmitted to the output gear 76a is transmitted toward the differential apparatus 78, in other words, to the drive wheel side via the ring gear 80 to enable the traveling of the vehicle. The same applies to the torque transmission in the case where the vehicle is traveled by using other gear pairs.

Power is generated by using the drive force of the internal combustion engine 16 when the vehicle is stopped by the control of the dog clutch, and the battery for driving the motor generator 18 may be charged. For example, the first dog clutch 34, the second dog clutch 40, and the third dog clutch 50 are brought into a neutral state, and the second drive gear 52 and the fourth drive gear 54 are fixed to the input shaft 12 by the fourth dog clutch 62. Then, the clutch 14 is brought into the connecting state. Consequently, the input shaft 12 is rotated by the torque of the internal combustion engine 16 and, in association therewith, the fourth drive gear 54 is rotated. Since the output shaft 82 of the motor generator 18 engages with the fourth drive gear 54 via the idle gear 86, the output shaft 82 of the motor generator 18 is rotated by the internal combustion engine 16, and functions as a motor generator. In other words, a state or generating power is assumed when the vehicle is stopped.

In addition, the internal combustion engine 16 in a stopped state is started by the motor generator 18 by the control of the dog clutch. For example, when the internal combustion engine 16 is stopped, the second drive gear 52 and the fourth drive gear 54 are fixed to the input shaft 12 by the fourth dog clutch 62. In contrast, the first dog clutch 34, the second dog clutch 40, and the third dog clutch 50 are brought into the neutral state, and the clutch 14 is brought into the connecting state. If the motor generator 18 is driven in this state, the fourth drive gear 54 in the stopped state can be rotated. In other words, the internal combustion engine 16 can be started by rotating the input shaft 12 in the stopped state and rotating a crankshaft of the internal combustion engine 16 via the clutch 14. This configuration allows a starter apparatus for the internal combustion engine 16 to be omitted and contributes to simplification of the configuration and a reduction in cost.

At the time of the reverse travel on the basis of the cooperative control, for example, the torque of the internal combustion engine 16 passes through the input shaft 12 via the first gear pair 64 including the first/reverse travel drive gear 56 and the first driven gear 22, and is further transmitted to the reverse travel gear pair 74 including the first driven gear 22 and the driven gear for reverse travel 44. Consequently, the driven gear for reverse travel 44 fixed to an output gear 76b by the dog for reverse travel 48 rotates in a direction opposite to the direction of rotation of the input shaft 12, and cause the vehicle to move rearward. At this time, by switching the A dog 60 into the torque-transmitting state, the torque of the internal combustion engine 16 is transmitted to the fourth drive gear 54 to rotate the output shaft 82 of the motor generator 18. In other words, power generation or assist can be performed during the reverse travel control.

In the automatic transmission apparatus 10 configured as described above, a configuration of maintaining the stopped state of the vehicle, a configuration of maintaining a parking state, that is, the stopped state of the vehicle by achieving a parking state, that is, locking the output shaft will be described.

As described above, the automatic transmission apparatus 10 of the embodiment includes a plurality of gear pairs having different gear ratios, and transmission is switched between the torque-transmitting state in which the torque can be transmitted from one gear pair to another, and the non-torque-transmitting state in which the torque is not transmitted by the dog clutch. For example, when both of the gear pairs having different gear ratio between the input shaft and the output shaft are brought into the torque-transmitting state in which the torque can be transmitted, a relative rotation between the input shaft and the output shaft is disabled. In other words, the parking state in which the output shaft is locked is achieved.

In conjunction with Fig. 1, an example in which the output shaft 20a is locked with respect to the input shaft 12 by bringing the first gear pair 64 and the second gear pair 66 or the fourth gear pair 70 into the torque-transmitting state, for example, between the input shaft 12 and the output shaft 20a will be described. As illustrated in Fig. 2, in the case where the dog teeth 110 of the dog clutch and the high teeth 108a or the low teeth 108b that forms the spline 108 are aligned in phase, these teeth cannot engage with each other. If the gear pair on one of the input shaft 12 and the output shaft 20a is switched to the torque-transmitting state, the phase of the gear pair on the other one of those may be determined correspondingly. Therefore, in the case where an attempt is made to engage the dog clutch in order to switch the gear pair on the other one of those into the torque-transmitting state, the dog teeth of the dog clutch and the high teeth or the low teeth of the sleeve are aligned in phase, so that the translation to the parking state may become impossible.

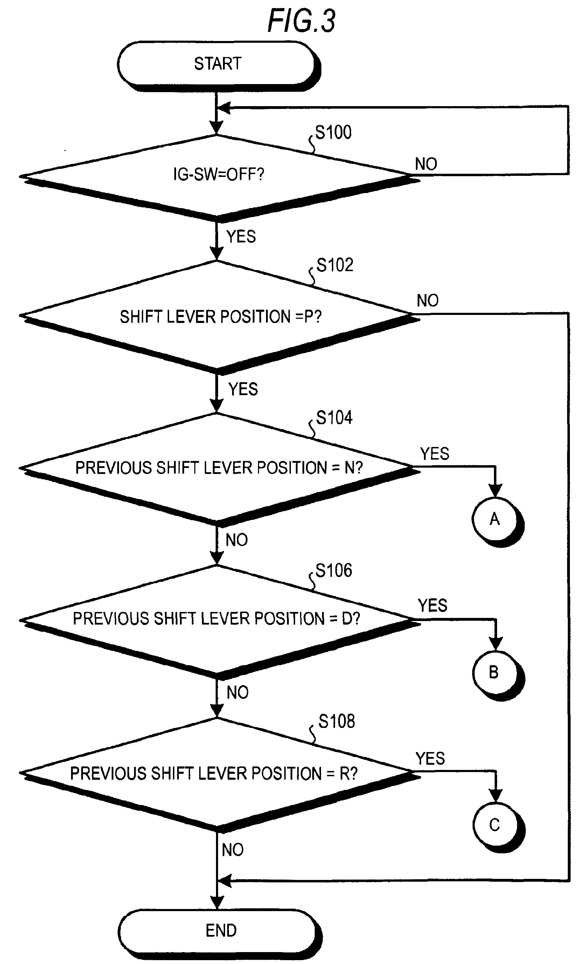

Referring now to flowcharts in Fig. 3 to Fig. 8, an example of realizing a parking state by using the gear pairs for traveling of the automatic transmission apparatus 10 when the vehicle is stopped. In the embodiment, an example in which the two gear pairs are switched to the torque-transmitting state by controlling the dog 60, the first dog 30, and the second dog 36 or the fourth dog 38 will be described.

The flowchart in Fig. 3 describes the processes depending on the positions of the shift lever of the vehicle immediately before the stop of the vehicle (immediately before moving the shift lever to the parking range). A shift lever position of the embodiment is categorized, for example "P: parking" "R: reverse" "N: neutral", and "D: drive", and "D" further includes a neutral position effected in the case of shift-up "+" and shift-down "-" are selected by a manual operation.

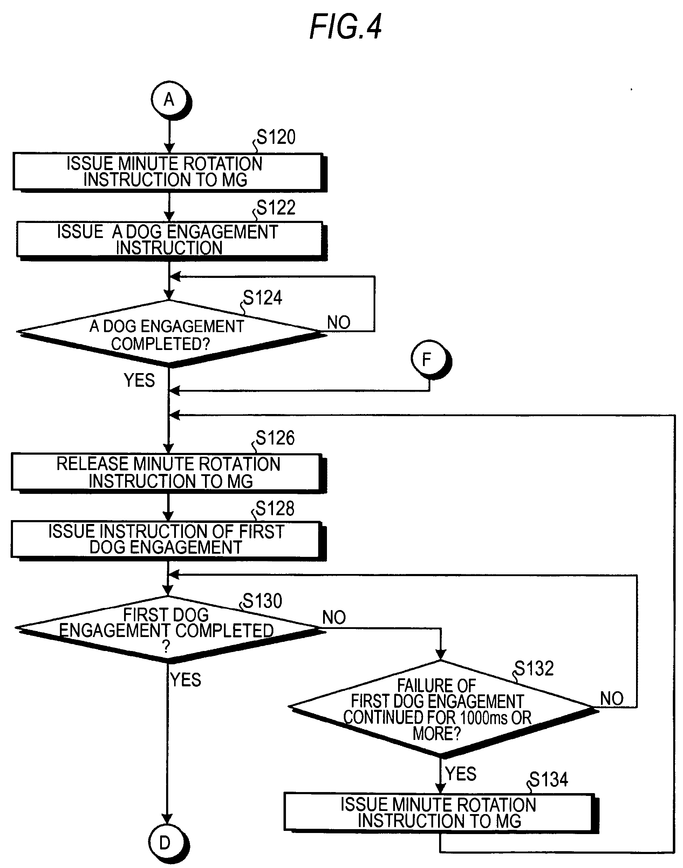

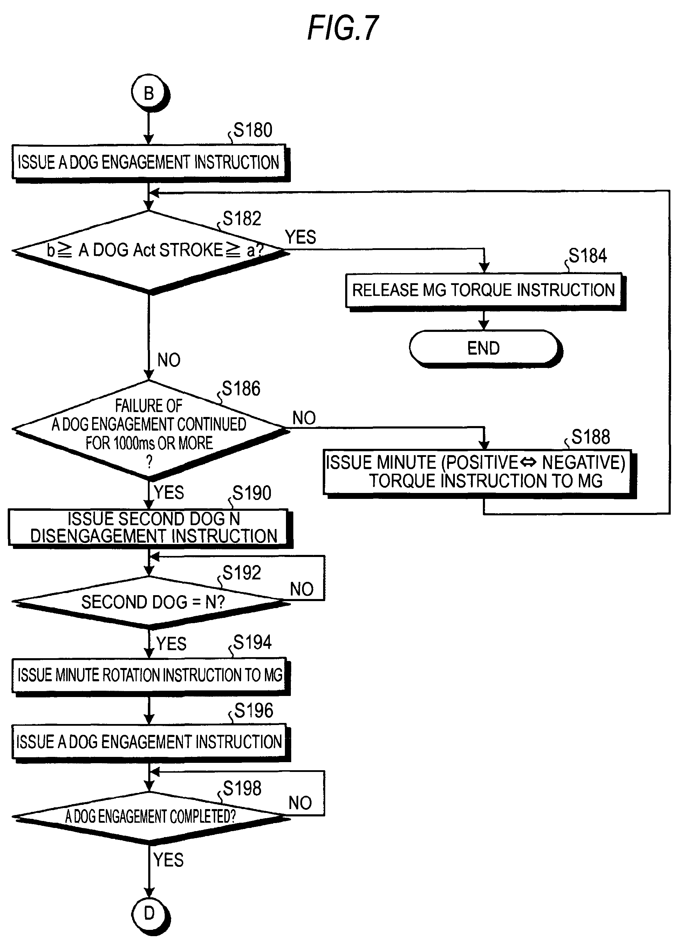

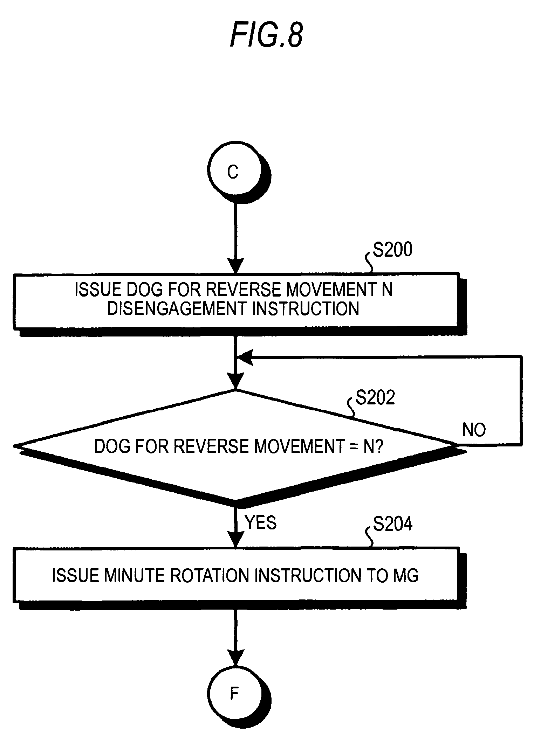

The ECU 92 confirms whether or not the ignition switch is turned OFF at a constant control cycle when the ignition switch (IG-SW) of the vehicle is ON (N in S100). The processes to be performed for establishing the parking state in which a traveling gear of the automatic transmission apparatus 10 is used depending on the cases, that is, in the case where the ignition switch is turned OFF (Y in S100), that is, in the case where a driver does not have a willing to make the vehicle travel is sorted out. First of all, the ECU 92 detects whether the shift lever position is shifted to "P". If the shift lever position is not shifted to "P", it is determined that the driver does not have a willing to park the vehicle (parking), and the flow is stopped once (N in S102). The ECU 92 proceeds to Process A in the flowchart in Fig. 4, which will be descried later, in the case where the fact that the shift lever position is shifted to "P" (Y in S102), and the shift lever position immediately before the shift to "P" (previous time) is "N" (Y in S104). In contrast, in the case where the shift lever position immediately before the shift to "P" is not "N" in S104 (N in S104) and is "D" (Y in S106), the procedure goes to Process B in a flowchart in Fig. 7, which will be described later. In the case where the shift lever position immediately before the shift to "P" is not "D" in S106 (N in S106), and is R (Y in S108), the procedure goes to process C in flowchart in Fig. 8, which will be described later. In the case where the shift lever position is not "R" (N in S108), it is determined that a system error occurs, and this flow is terminated once.

Fig. 4 is a flowchart for explaining process A in the case where the shift lever position is "N" immediate (previous time) before the shift to "P" in S104, in the flowchart in Fig. 3. In this case, the respective dog clutches of the automatic transmission apparatus 10 are all in the non-torque-transmitting state (neutral).

The ECU 92 issues a minute rotation instruction to the motor generator 18 (S120). For example, the ECU 92 issues an instruction to rotate at 10 rpm. For example, in the case where the A dog 60 is switched from the torque-transmitting state to the non-torque-transmitting state before the vehicle is stopped, it means that the clutch front teeth 110a and the high teeth 108a is disengaged from a state of engagement at positions adjacent to each other. In other words, in a state in which a phase difference between the clutch front teeth 110a and the high teeth 108a is small, and an attempt is made to engage the clutch front teeth 110a and the high teeth 108a, the phases may be aligned and hence the engagement may not be achieved. As described before, since the clutch front teeth 110a and the high teeth 108a are arranged at positions 180 degrees apart from each other, there is a play of approximately 180 degrees. Therefore, the fourth drive gear 54 and the second drive gear 52 in the state of being rotatable are minutely rotated by the motor generator 18 to provide the clutch front teeth 110a and the high teeth 108a with a phase difference in advance, and therefore, a probability that the engagement is not achieved due to an alignment in phase is reduced.

Subsequently, the ECU 92 issues an A dog engagement instruction to the actuator 106b that drives the fork member 106a of the fourth dog clutch 62 and performs dog engagement control (S122) in order to switch the A dog 60 into the torque-transmitting state.

Whether or not the fourth dog clutch 62 is completely engaged may be detected by whether or not the fork member 106a of the movable mechanism 106 moves to a position where the engagement between the clutch rear teeth 110b and the low teeth 108b is completed, that is, on the basis of the amount of movement. Since the minute rotation of the motor generator 18 is performed continuously, the dog engagement control for moving the fork member 106a is continued until the A dog 60 is brought into the torque-transmitting state (completion of A dog engagement) (N in S124). In contrast, when the A dog 60 is brought into the torque-transmitting state (Y in S124), the ECU 92 releases the minute rotation instruction of the motor generator 18 (S126).

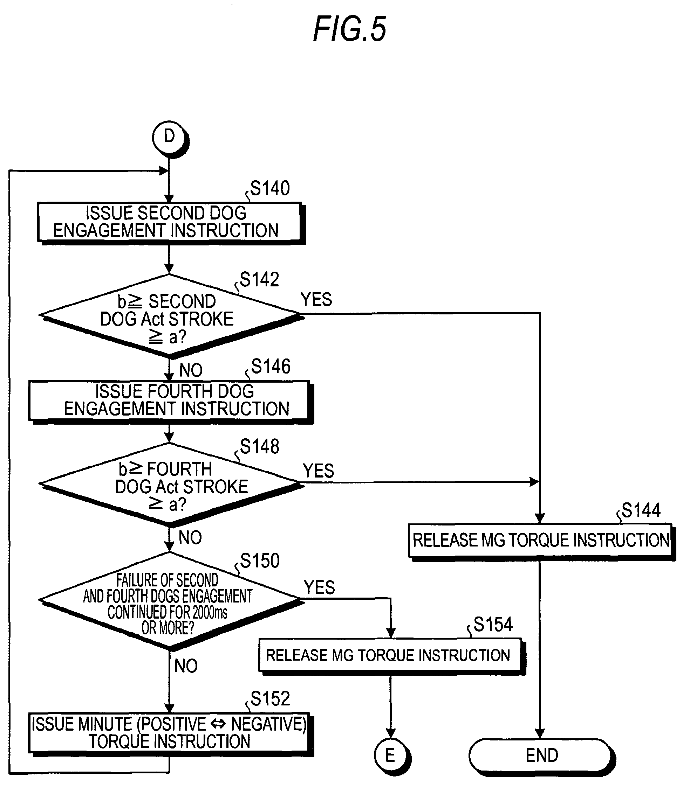

Subsequently, the ECU 92 issues an instruction to change the state of the first dog 30 to the torque-transmitting state (the first dog engagement instruction) to the actuator 106b that controls the fork member 106a of the first dog clutch 34 (S128). Then the ECU 92 proceeds to process D shown by the flowchart in Fig. 5 in the case where the it is recognized that the first dog 30 is brought into the torque-transmitting state (the state in which the first dog engagement is completed), that is, the engagement between the clutch rear teeth 110b on the first dog 30 side of the first dog clutch 34 and the low teeth 108b of the sleeve 104 is completed (Y in S130) on the basis of the amount of movement of the fork member 106a of the first dog clutch 34. At this time point, one of the gear pairs is brought into the torque-transmitting state between the input shaft 12 and the output shaft 20a.

In contrast, in the case where the first dog engagement in S130 is not completed (N in S130), or in the case where the failure of the dog engagement of the first dog 30 continues for a predetermined period, 1000 ms or more (Y in S132), for example, the ECU 92 issues the minute rotation instruction to the motor generator 18 (S134). In this case, since the A dog 60 is already switched to the torque-transmitting state, the second drive gear 52 and the fourth drive gear 54 are fixed to the input shaft 12. Therefore, the first driven gear 22 makes a minute rotation via the input shaft 12 and the first/reverse travel drive gear 56 fixed to the input shaft 12 by the rotation of the motor generator 18. In other words, the phases of the dog teeth 110 of the first dog 30 and the high teeth 108a or the low teeth 108b of the sleeve 104 may be shifted. Subsequently, the procedure goes to S126, to release the minute rotation instruction of the motor generator 18 and to continue the dog engagement control of the first dog 30 in new phase conditions. In S132, the period of the failure of dog engagement of the first dog 30 is a predetermined period, for example, smaller than 1000 ms (N in S132), the procedure goes to S130 and the dog engagement control of the first dog 30 is continuously performed.

Fig. 5 is a flowchart of a Process D continued from the state of completion of the dog engagement control of the first dog 30 in S130 in Fig. 4.

The ECU 92 performs a control of switching the second gear pair into the torque-transmitting state after the first gear pair 64 is switched to the torque-transmitting state. First of all, the ECU 92 issues the second dog 36 engagement instruction to the actuator 106b that causes the fork member 106a of the second dog clutch 40 to move (S140). Then, the ECU 92 detects whether the movement stroke of the fork member 106a of the second dog clutch 40 is within a predetermined range (S142). In this case, with the stroke of the fork member 106a set as a second dog Act stroke with reference to the neutral position of the second dog clutch 40, the ECU 92 detects whether a relationship of b ≥ second dog Act stroke ≥ a is established where a point of engagement between the clutch front teeth 110a of the clutch ring 100 of the second driven gear 26 and the high teeth 108a of the sleeve 104 (a point where the engagement between the gears starts) is a threshold value a, and a point of engagement between the clutch rear teeth 110b and the low teeth 108b is threshold value b. If b ≥ second dog Act stroke ≥ a is established (Y in S142), at least the clutch front teeth 110a and the high teeth 108a are displaced in phase, and a play of approximately 180 degrees is present between the clutch front teeth 110a and the high teeth 108a. Therefore, even though the clutch rear teeth 110b and the low teeth 108b are aligned in phase, the phase may be shifted within the play between the clutch front teeth 110a and the high teeth 108a on the second driven gear 26 side, and hence the engagement between the clutch rear teeth 110b and the low teeth 108b is easily achieved. In other words, the dog engagement process of the second dog 36 is completed. Therefore, in the case where the torque instruction is issued to the motor generator 18 when the dog engagement process of the second dog 36 is-completed, the ECU 92 releases the torque instruction (S144), and the flow is ended. At this time point, the two gear pairs having different gear ratios are switched into the torque-transmitting state between the input shaft 12 and the output shaft 20a to disable a relative rotation between the input shaft 12 and the output shaft 20a. In other words, the parking state is achieved by using a traveling gear of the automatic transmission apparatus 10. Consequently, the gear for the parking and the mechanism or the actuator for causing the engagement thereof, which has been required in the related art, may be omitted, so that simplification, a reduction in size, and a reduction in cost of the configuration of the automatic transmission apparatus are achieved.

If b ≥ second dog Act stroke > a is not established in S142 (N in S142), the control using the second dog 36 is stopped once, and an attempt is made to control using other fourth dog 38 in the second dog clutch 40. In other words, the ECU 92 issues a fourth dog engagement instruction to the actuator 106b which drives the fork member 106a of the second dog clutch 40 to move the fork member 106a toward the fourth driven gear 28 (S146). The ECU 92 detects whether the movement stroke of the fork member 106a of the second dog clutch 40 falls within a predetermined range (S148). In this case, whether or not the relationship of b ≥ fourth dog Act stroke ≥ a is satisfied is detected. If the relationship of b ≥ fourth dog Act stroke ≥ a is satisfied (Y in S148), at least the phases between the clutch front teeth 110a of the fourth dog 38 and the high teeth 108a are shifted, and the play between the clutch front teeth 110a and the high teeth 108a of approximately 180 degrees is present. Therefore, even though the phases of the clutch rear teeth 110b and the low teeth 108b are aligned, the phases may be shifted within the range of the play between the clutch front teeth 110a and the high teeth 108a on the fourth driven gear 28 side, whereby the engagement between the clutch rear teeth 110b and the low teeth 108b is easily realized. In other words, the dog engagement process of the fourth dog 38 may be completed. In the case where the torque instruction is issued to the motor generator 18 when the dog engagement process of the fourth dog 38 is completed, the ECU 92 releases the torque instruction (S144) and the flow is ended.

In contrast, in the case where the relationship of b ≥ fourth dog Act stroke ≥ a is not satisfied in S148 (N in S148), and failure time from the start of the second dog and the fourth dog engagement control does not continue for 2000 ms or more (N in S150), an instruction of output of the minute torque is issued to the motor generator 18 (S152). In this case, the output torque generates a positive torque or a negative torque. Since the A dog 60 and the first dog 30 are already switched to the torque-transmitting state, if the motor generator 18 generates the torque, the output shaft 20a rotates via the input shaft 12 and the first gear pair 64, and the hub 102 of the second dog clutch 40 rotates. In other words, the sleeve 104 rotates, and the phase of the high teeth 108a of the sleeve 104 is displaced from the phase of the dog teeth 110 on the second driven gear 26 side and the phase of the dog teeth 110 on the fourth driven gear 28 side. Then, the procedure goes to S140, and an attempt is made to retry from the second dog engagement control.

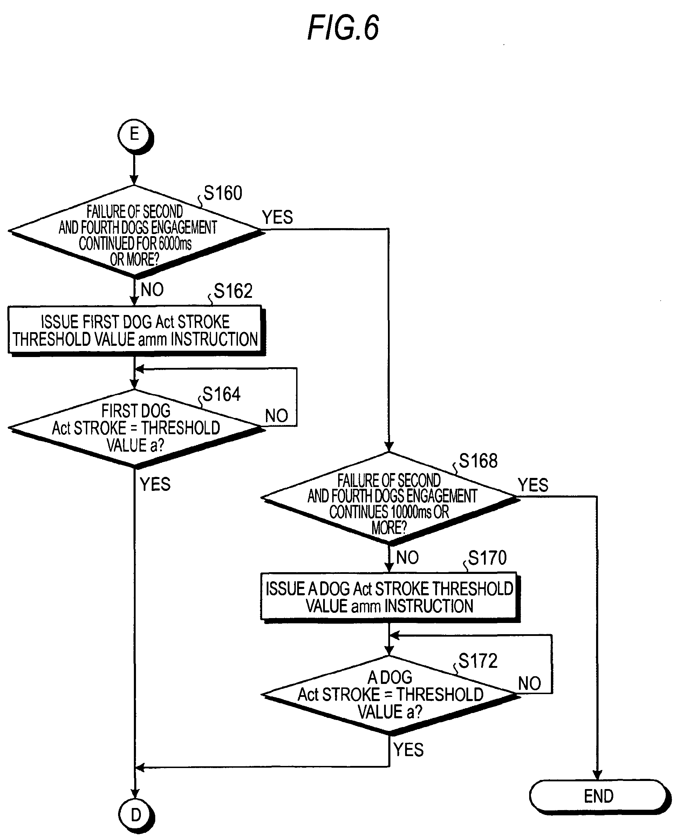

In S150, in the case where the failure time from the start of the second dog and the fourth dog engagement control continues for 2000 ms or more (Y in S150), if the torque instruction is issued to the motor generator 18, the ECU 92 release the torque instruction thereof (S154), and shifts to Process E which is a different handling shown in the flowchart in Fig. 6.

Fig. 6 is a flowchart for explaining Process E in the case where the second dog and the fourth dog engagement control is failed for 2000 ms or more in the flow in Fig. 5.

In the case where the failure of the second dog and the fourth dog engagement control continues for a duration from 2000 ms inclusive to 6000 ms exclusive (N in S160), the ECU 92 releases the complete engagement of the first dog 30 temporarily to form a play in engagement for the first driven gear 22 in a state of being already fixed to the output shaft 20a. In other words, in order to achieve the engagement only between the clutch front teeth 110a of the dog teeth 110 and the high teeth 108a of the sleeve 104, the ECU 92 issues an instruction to make the first dog Act stroke to the threshold value a (mm) to the actuator 106b which drives the fork member 106a (S162). Then, the ECU 92 waits until the first dog Act stroke of the fork member 106a of the first dog clutch 34 to be the threshold value a (N in S164), and when the threshold value a is reached (Y in S164), the procedure goes to S140 in Fig. 5, where the procedure from Process D is retried. In this case, a play of approximately 180 degrees is present between the first driven gear 22 and the output shaft 20a at a portion of the first dog 30. Therefore, the torque may be supplied from the motor generator 18 to rotate the fourth driven gear 28 and the second driven gear 26 via the fourth drive gear 54 and the second drive gear 52. In other words, by executing Process D, the phase of the dog teeth 110 corresponding to the second driven gear 26 with respect to the sleeve 104 of the second dog clutch 40, and the phase of the dog teeth 110 corresponding to the fourth driven gear 28 may be shifted. Consequently, a probability of succeed of the second dog engagement control or the fourth dog engagement control in Process D may be enhanced.

In the case where the failure of the second dog and the fourth dog engagement control continues for 6000 ms or more in S160 (Y in S160), it means that, for example, the dog engagement control is not successful even though the control of releasing the complete engagement of the first dog 30 temporarily and Process D is performed by a plurality of time. In this case, if the failure of the second dog and the fourth dog engagement control continues for a duration from 6000 ms inclusive to 10000 ms exclusive (N in S168), the complete engagement of the A dog 60 is temporarily released to form a play in engagement for the second drive gear 52 and the fourth drive gear 54 in a state of being already fixed to the input shaft 12. In other words, in order to achieve the engagement only between the clutch front teeth 110a and the high teeth 108a, the ECU 92 issues an instruction to make the A dog Act stroke to the threshold value a (mm) to the actuator 106b which drives the fork member 106a (S170). Then, the ECU 92 waits until the A dog Act stroke of the fork member 106a of the fourth dog clutch 62 to be the threshold value a (N in S172), and when the threshold value a is reached (Y in S172), the procedure goes to S140 in Fig. 5, where the procedure from Process D is retried. In this case, plays of approximately 180 degrees between the second drive gear 52 and the fourth drive gear 54 with respect to the input shaft 12 are present at a portion of the A dog 60. Therefore, the torque may be supplied from the motor generator 18 to rotate the second driven gear 26 and the fourth driven gear 28 via the second drive gear 52 and the fourth drive gear 54. In other words, by re-executing Process D, the phase of the dog teeth 110 corresponding to the second driven gear 26 with respect to the sleeve 104 of the second dog clutch 40, and the phase of the dog teeth 110 corresponding to the fourth driven gear 28 may be shifted. Consequently, a probability of succeed of the second dog engagement control or the fourth dog engagement control in Process D may be enhanced.

In the case where the failure of the second dog and the fourth dog engagement control continues for 10000 ms or higher in S168 (Y in S168), for example, if the dog engagement control is not successful even though the control to release the complete engagement of the A dog 60 temporarily and shift the phase is performed and Process D is performed by a plurality of times, the ECU 92 recognizes that the establishment of the parking state is difficult by using the traveling gear of the automatic transmission apparatus 10 and terminates this process. In this case, it is preferable the fact that the establishment of the parking state by using the traveling gear of the automatic transmission apparatus 10 cannot be achieved is notified to the driver as an alarm to encourage the driver to operate a parking brake apparatus provided on the wheel side reliably. In this manner the dog engagement control may be completed efficiently for a short time by determining the priority of dog engagement control and the priority of releasing the engagement between the clutch rear teeth 110b and the low teeth 108b where the torque-transmitting state is already established temporarily for each of the dog clutches and achieving the engagement only between the clutch front teeth 110a and the high teeth 108a, and executing the dog engagement control in order of priority.

Fig. 7 is a flowchart for explaining Process B in the case where the shift lever position is at "D" immediately before being shifted to "P" in S106 in Fig. 3. The vehicle on which the automatic transmission apparatus 10 of the embodiment is mounted is configured to maintain the state of the gear of the automatic transmission apparatus 10 as is when the vehicle is stopped with the shift lever positioned at "D". In other words, the state in which the first gear pair 64 is switched to the torque-transmitting state is maintained as-is so as to allow the drive force of the internal combustion engine 16 to be transmitted to the output shaft 20a. In the same manner, the state in which the second gear pair 66 is switched to the torque-transmitting state is maintained as-is so as to allow the drive force of the motor generator 18 to be transmitted to the output shaft 20a. In other words, the first dog 30 and the second dog 36 are still switched to the torque-transmitting state. Therefore, the first driven gear 22 and the second driven gear 26 are in the state of being completely fixed to the output shaft 20a. The process B starts a process of switching the A dog in the non-torque-transmitting state to the torque-transmitting state on the presumption that the first dog 30 and the second dog 36 are in the torque transmitting state.

The ECU 92 issues an instruction of an A dog engagement process to the actuator 106b configured to drive the fork member 106a of the fourth dog clutch 62 (S180). Then the ECU 92 detects whether the movement stroke of the fork member 106a falls within a predetermined range (S182). In this case, with the stroke of the fork member 106a set as A dog Act stroke with reference to the neutral position (the position of the non-torque-transmitting state) of the fourth dog clutch 62, the ECU 92 detects whether or not a relationship of b ≥ A dog Act stroke ≥a is established where a point of engagement between the clutch front teeth 110a of the clutch ring 100 of the second drive gear 52 and the high teeth 108a of the sleeve 104 (a point where the engagement between the gears starts) is a threshold value a, and a point of engagement between the clutch rear teeth 110b and the low teeth 108b is a threshold value b. If b ≥ A dog Act stroke ≥ a is established (Y in S182), at least the clutch front teeth 110a and the high teeth 108a are displaced in phase, and a play of approximately 180 degrees is present between the clutch front teeth 110a and the high teeth 108a. Therefore, even though the phases of the clutch rear teeth 110b and the low teeth 108b are aligned, the phases may be shifted within the range of the play between the clutch front teeth 110a and the high teeth 108a on the second drive gear 52 side, whereby the engagement between the clutch rear teeth 110b and the low teeth 108b is easily realized. In other words, the dog engagement process of the A dog 60 may be completed. In the case where the torque instruction is issued to the motor generator 18 when the dog engagement process of the A dog 60 is completed, the ECU 92 releases the torque instruction (S184) and the flow is ended. At this time point, the two gear pairs having different gear ratios are switched into the torque-transmitting state between the input shaft 12 and the output shaft 20a to disable a relative rotation between the input shaft 12 and the output shaft 20a. In other words, the parking state is achieved by using a traveling gear of the automatic transmission apparatus 10.

In contrast, in the case where the relationship of b ≥ A dog Act stroke ≥ a is not satisfied (N in S182), and failure of the dog engagement control of the A dog 60 does not continue for 1000 ms or more (N in S186), the ECU 92 issues an instruction of generation of the minute torque to the motor generator 18 (S188), and the procedure goes to S182. The direction of generation of the torque may either be the positive direction or the negative direction. The positive and negative may be output alternatively. In this case, the input shaft 12 and the output shaft 20a are in the torque-transmitting state in the first gear pair 64, and the output shaft 20a and the second driven gear 26 are fixed. However, slight plays are present in the respective engagements. Therefore, when the motor generator 18 generates a minute torque, the second drive gear 52 and the fourth drive gear 54 also have a probability of making a minute rotation. Consequently, the phases of the high teeth 108a of the A dog 60 and the clutch front teeth 110a of the dog teeth 110 on the second drive gear 52 side are displaced, and a probability of success of the dog engagement control of the A dog 60 is increased.

In contrast, when the failure of the dog engagement control of the A dog 60 continues for 1000 ms or more, for example (Y in S186), the ECU 92 issues an N disengagement instruction for disengaging the second dog 36 and bringing the same into the neutral state to the second dog clutch 40 (S190). In other words, the second driven gear 26 fixed already to the output shaft 20a is brought into a rotatable state once, and then the second drive gear 52 is rotated by the motor generator 18 via the fourth drive gear 54. Consequently, the phases of the high teeth 108a of the A dog 60 and the clutch front teeth 110a of the dog teeth 110 on the second drive gear 52 side are displaced, so that the engaged state is easily achieved. The ECU 92 waits for the second dog clutch 40 being brought into the neutral state (N in S192), and when the second dog clutch 40 is brought into the neutral state (Y in S192), issues a minute rotation instruction to the motor generator 18. Accordingly, the A dog 60 is brought into a state of being engaged easily. Subsequently, the ECU 92 issues an instruction to execute the dog engagement control of the A dog 60 to the actuator 106b of the fork member 106a which drives the fourth dog clutch 62 (S196). Then, the ECU 92 waits for the dog engagement control of the A dog 60 being completed (N in S198), and when the dog engagement control of the A dog 60 is completed (Y in S198), the procedure goes to Process D illustrated in Fig. 5, where an attempt is made to retry the dog engagement control of the second dog 36. In this manner, the parking state may be established quickly by performing the control by utilizing the fact that the gear pair on the low-speed side is in the torque-transmitting state when the vehicle stops.

Fig. 8 is a flowchart for explaining Process C in a case where the shift lever position is at "R" immediately before being shifted to "P" in S108 in Fig. 3. In the case of the embodiment, the gear at the time of reverse travel is assumed to be in the state in which the A dog 60 and the dog for reverse travel 48 have been switched to the torque-transmitting state when the vehicle is stopped.

The ECU 92 issues an instruction to perform a dog for reverse travel N disengagement control, which is control to disengage the dog for reverse travel 48 with respect to the actuator 106b to achieve the neutral state, to the fork member 106a configured to drive the fork member 106a of the third dog clutch 50 (S200). Then, the ECU 92 waits for the dog for reverse travel 48 being brought into the neutral state (N in S202), and when the dog for reverse travel 48 is brought into the neutral state (Y in S202), issues a minute rotation instruction to the motor generator 18 (S194), so as to enhance a probability that the phases of the gears to be engaged by the dog engagement control of the first dog clutch 34 and the second dog clutch 40 are displaced. Subsequently, as indicated by reference sing F in Fig. 4, the procedure goes to S126, and the ECU 92 executes the dog engagement controls of the first dog 30, the second dog 36, or the fourth dog 38.

In this manner, the parking state in which the wheels side is prevented from moving by using the gears for traveling may be established by bringing at least two of the gear pairs having different gear ratios into the torque-transmitting state between the input shaft 12 and the output shaft 20a. In this configuration, by bringing at least two gear pairs having different gear ratio into the transmitting state which allows torque transmission, the input shaft 12 and the output shaft 20a are brought into a locked state in which relative rotation cannot be performed due to the difference in gear ratio between at least the two gear pairs. In other words, the parking state in which neither the input shaft 12 nor the output shaft 20a can be rotated is achieved. Therefore, the automatic transmission apparatus having a parking function is achieved although a specific configuration for parking is omitted, so that a reduction in size, simplification, and a reduction in cost of the automatic transmission apparatus are achieved consequently. As described in conjunction with the respective flowcharts, by bringing the dog clutches are engaged in accordance with the predetermined priority when a plurality of gear pairs having different gear ratios are switched into the torque-transmitting state, the plurality of gear pairs having different gear ratios may be switched to the torque-transmitting state efficiently.

In the embodiment described above, the configuration illustrated in Fig. 1 is an example only, and a configuration in which the output shafts 20a and 20b are present with respect to the input shaft 12 has been described thus far. However, the output shaft may be composed of one output shaft, and the same advantages as the embodiment described above are achieved. In this embodiment, the example in which the automatic transmission apparatus 10 includes five gears for forward travel and one gear for reverse travel has been described. However, the configuration of the transmission gears may be selected as needed, and the same effects as the embodiment disclosed here can be obtained as long as the configuration includes at least two gear pairs having different gear ratios. In the embodiment disclosed here, the example including the first gear pair 64, the second gear pair 66, and the fourth gear pair 70 has been described as the gear pairs having different gear ratios. However, the same effects as the embodiment may be provided even though other gear ratios are used as long as the gear ratios are different. In addition, the arrangement of the dog clutch may be changed as needed as long as the switching of the respective gear pairs between the torque-transmitting state and the non-torque-transmitting state may be changed as needed. For example, the first dog clutch 34 may be used for switching the transmission between the first/reverse travel drive gear 56 and the third/fifth drive gear 58.

In the embodiment described above, the configuration in which the motor generator 18 is driven to shift the phases when the phases of the dog teeth of the dog clutch and the high teeth or the low teeth are aligned has been described. In another modification, an external supply torque may be provided by utilizing the rotation of the internal combustion engine 16 as means for shifting the phases. In the example in Fig. 2, the example in which the gear 52a of the second drive gear 52 is formed on the outer peripheral surface of the clutch ring 100 has been described. However, the clutch ring may be fixed integrally to the side surface of the second drive gear 52, which is rotatable with respect to the input shaft 12, so as to be coaxial therewith.

In the flowchart illustrated in Fig. 6, the example in which the engagement state of the first dog 30 and the A dog 60 is returned to the position of the threshold value a so that only the clutch front teeth 110a and the high teeth 108a engage and the play is formed, thereby allowing another dog clutch to engage has been described. In this case, after another dog clutch is engaged, the engaged state of the first dog 30 and the A dog 60 may be returned so that the clutch rear teeth 110b and the low teeth 108b engage with each other again. The respective flowcharts show an example of the flow of control, and the order or processing may be changed as needed as long as at least the two gear pairs having different gear ratios may be brought into the torque-transmitting state between the input shaft 12 and the output shaft 20a, whereby the same advantages are achieved.

Although several embodiments of the invention has been described, these embodiments are intended for illustration only, and are not intended to limit the scope of the invention.

## Claims

1. An automatic transmission apparatus (10) comprising:
a plurality of first gears (52, 54, 56, 58) provided on a first shaft (12);
a plurality of second gears (22, 24, 26, 28, 42, 44) provided on a second shaft (20a, 20b), and configured to engage with any one of the first gears to constitute gear pairs having different gear ratio;
a switching mechanism (34, 40, 50, 62) configured to switch each of the gear pairs between a transmitting state in which a torque is transmitted between the first shaft and the second shaft via the gear pairs and a non-transmitting state in which the torque is not transmitted; and
a gear control unit (92) configured to control the switching mechanism while the vehicle is stopped, and switch at least two gear pairs to the transmitting state,
wherein
the switching mechanism includes:
a clutch ring (100) supported so as to be rotatable about an axis of at least one of the first shaft (12) and the second shaft (20a, 20b) and configured to concentrically fix the first gears (52, 54, 56, 58) or the second gears (22, 24, 26, 28, 42, 44) so as to be rotatable;
a hub (102) fixed to the first shaft (12) or the second shaft (20a, 20b) configured to support the clutch ring (100);
a sleeve (104) configured to fit the hub (102) so as to be movable on the first shaft (12) or the second shaft (20a, 20b) having the hub (102) fixed thereto in an axial direction; and
a movable mechanism (106) configured to move the sleeve (104) in the axial direction, and
the clutch ring (100) is provided so as to project toward the sleeve (104) and includes dog teeth (110) capable of engaging with a spline (104) formed on the sleeve (104) by the movement of the sleeve in the axial direction,
**characterized in that**
at least one of gears (52, 54, 56, 58, 22, 24, 26, 28, 42, 44) which constitute the gear pairs is rotatable by an external supply torque when the vehicle is stopped such that, when teeth phases of the spline (104) of the sleeve (104) and the clutch ring (100) are aligned and hence cannot engage with each other, the at least one of the gears (52, 54, 56, 58, 22, 24, 26, 28, 42, 44) is rotated by the external supply torque so as to allow an engagement of the spline (104) and the teeth (110) of the clutch ring (100) with each other.

2. The automatic transmission apparatus according to Claim 1,
wherein the spline includes
a plurality of high teeth (108a) and a plurality of low teeth (108b) having a lower height than the high teeth, and
the dog teeth includes:
clutch front teeth (110a) including the same number of teeth as the high teeth and having an outer diameter larger than an inner diameter of the high teeth and smaller than an inner diameter of the low teeth, and
clutch rear teeth (110b) capable of engaging with tooth grooves on the spline and formed at positions retracted from the clutch front teeth in the direction away from the hub.

3. The automatic transmission apparatus according to Claim 1 or 2,
wherein the gear control unit controls the movable mechanism of the switching mechanism to cause the spline and the dog teeth to engage with each other according to a predetermined priority under the conditions that the vehicle satisfies predetermined parking conditions.

4. The automatic transmission apparatus according to Claim 3,
wherein the predetermined parking conditions are that the remaining spline and dog teeth engage with each other on the premise that the vehicle is stopped with the spline corresponding to the low-speed side gear pair out of the gear pairs and the dog teeth engaging with each other.

5. The automatic transmission apparatus according to Claim 3 or 4,
wherein the gear control unit adjusts the engagement state by rotating at least one of the gears which constitute the gear pairs configured to switch the transmitting state according to the predetermined priority if the engagement between the spline and the dog teeth is not established.

## Patentansprüche

1. Automatikgetriebevorrichtung (10), enthaltend:
eine Vielzahl von ersten Zahnrädern (52, 54, 56, 58), die auf einer ersten Welle (12) vorgesehen sind;
eine Vielzahl von zweiten Zahnrädern (22, 24, 26, 28, 42, 44), die auf einer zweiten Welle (20a, 20b) vorgesehen sind und die ausgestaltet sind zum Eingreifen in eines aus den ersten Zahnrädern zum Bilden von Zahnradpaaren, die ein unterschiedliches Übersetzungsverhältnis aufweisen;
einen Umschaltmechanismus (34, 40, 50, 62), der ausgestaltet ist zum Umschalten jedes der Zahnradpaare zwischen einem Übertragungszustand, bei dem ein Drehmoment zwischen der ersten Welle und der zweiten Welle über die Zahnradpaare übertragen wird, und einem Nicht-Übertragungszustand, bei dem das Drehmoment nicht übertragen wird; und
eine Zahnrad-Steuereinheit (92), die ausgestaltet ist zum Steuern des Umschaltmechanismus, während das Fahrzeug angehalten ist, und zum Umschalten von wenigstens zwei Zahnradpaaren in den Übertragungszustand,
wobei
der Umschaltmechanismus aufweist:
einen Kupplungsring (100), der derart gelagert ist, dass er um eine Achse von wenigstens einer aus der ersten Welle (12) und der zweiten Welle (20a, 20b) drehbar ist, und der ausgestaltet ist zum konzentrischen Fixieren der ersten Zahnräder (52, 54, 56, 58) oder der zweiten Zahnräder (22, 24, 46, 28, 42, 44), so dass sie drehbar sind;
eine an der ersten Welle (12) oder der zweiten Welle (20a, 20b) befestigte Nabe (102), die ausgestaltet ist zum Lagern des Kupplungsrings (100);
eine Hülse (104), die ausgestaltet ist zum Einpassen der Nabe (102), so dass sie auf der ersten Welle (12) oder der zweiten Welle (20a, 20b) mit der Nabe (102) daran fixiert in einer axialen Richtung beweglich ist; und
einen beweglichen Mechanismus (106), der ausgestaltet ist zum Bewegen der Hülse (104) in der axialen Richtung, und
der Kupplungsring (100) derart vorgesehen ist, dass er in Richtung der Hülse (104) hervorsteht und Mitnehmerzähne (110) aufweist, die geeignet sind zum Eingreifen in eine Keilverzahnung (104), die auf der Hülse (104) ausgebildet ist, durch die Bewegung der Hülse in der axialen Richtung,
**dadurch gekennzeichnet, dass**
wenigstens eines der Zahnräder (52, 54, 56, 58, 22, 24, 46, 28, 42, 44), die die Zahnradpaare bilden, durch ein von außen zugeführtes Drehmoment drehbar ist, wenn das Fahrzeug angehalten ist, so dass, wenn Zahnphasen der Keilverzahnung (104) der Hülse (104) und der Kupplungsring (100) fluchten und folglich nicht ineinander eingreifen können, das wenigstens eine der Zahnräder (52, 54, 56, 58, 42, 24, 46, 28, 42, 44) durch das von außen zugeführte Drehmoment gedreht wird, so dass es einen Eingriff der Keilverzahnung (104) und der Zähne (110) des Kupplungsrings (100) ineinander ermöglicht.

2. Automatikgetriebevorrichtung nach Anspruch 1,
wobei die Keilverzahnung aufweist
eine Vielzahl von hohen Zähnen (108a) und eine Vielzahl von niedrigen Zähnen (108b), die eine geringere Höhe als die hohen Zähne aufweisen, und
die Mitnehmerzähne aufweisen:
Kupplungsvorderzähne (110a), die dieselbe Anzahl von Zähnen wie die hohen Zähne aufweisen und einen Außendurchmesser aufweisen, der größer ist als ein Innendurchmesser der hohen Zähne und kleiner ist als ein Innendurchmesser der niedrigen Zähne, und
Kupplungsrückzähne (100 b), die geeignet sind zum Eingreifen in Zahnnuten auf der Keilverzahnung und an Positionen ausgebildet sind, die von den Kupplungsvorderzähnen in der Richtung von der Nabe weg zurückgezogen sind.

3. Automatikgetriebevorrichtung nach Anspruch 1 oder 2,
wobei die Zahnrad-Steuereinheit den beweglichen Mechanismus des Umschaltmechanismus steuert zum Bewirken, dass die Keilverzahnung und die Mitnehmerzähne entsprechend einer vorgegebenen Rangfolge ineinander eingreifen unter den Bedingungen, dass das Fahrzeug vorgegebenen Parkbedingungen genügt.

4. Automatikgetriebevorrichtung nach Anspruch 3,
wobei die vorgegebenen Parkbedingungen sind, dass die verbleibende Keilverzahnung und Mitnehmerzähne ineinander eingreifen unter der Voraussetzung, dass das Fahrzeug angehalten ist, wobei die Keilverzahnung dem niedergeschwindigkeitsseitigen Zahnradpaar aus den Zahnradpaaren und den Mitnehmerzähnen entspricht, die ineinander eingreifen.

5. Automatikgetriebevorrichtung nach Anspruch 3 oder 4,
wobei die Zahnrad-Steuereinheit den Eingriffszustand durch Drehen wenigstens eines der Zahnräder, die die Zahnradpaare bilden, die zum Umschalten des Übertragungszustands entsprechend der vorgegebenen Rangfolge ausgestaltet sind, anpasst, wenn der Eingriff zwischen der Keilverzahnung und den Mitnehmerzähnen nicht hergestellt wird.

## Revendications

1. Appareil de transmission automatique (10), comprenant:
une pluralité de premiers engrenages (52, 54, 56, 58) prévus sur un premier arbre (12);
une pluralité de deuxièmes engrenages (22, 24, 26, 28, 42, 44) prévus sur un deuxième arbre (20a, 20b) et configurés de manière à s'engager avec l'un quelconque des premiers engrenages pour constituer des paires d'engrenages présentant des rapports d'engrenage différents;
un mécanisme de commutation (34, 40, 50, 62) configuré de manière à commuter chacune des paires d'engrenages entre un état de transmission, dans lequel un couple est transmis entre le premier arbre et le deuxième arbre par l'intermédiaire des paires d'engrenages, et un état de non transmission, dans lequel le couple n'est pas transmis; et
une unité de commande d'engrenages (92) configurée de manière à commander le mécanisme de commutation pendant que le véhicule est à l'arrêt, et à commuter au moins deux paires d'engrenages vers l'état de transmission,
dans lequel le mécanisme de commutation comprend:
une bague de synchronisation (100) supportée de manière à pouvoir tourner autour d'un axe d'au moins un parmi le premier arbre (12) et le deuxième arbre (20a, 20b) et configurée de manière à fixer de façon concentrique les premiers engrenages (52, 54, 56, 58) ou les deuxièmes engrenages (22, 24, 26, 28, 42, 44) de telle sorte qu'ils puissent tourner;
un moyeu (102) fixé au premier arbre (12) ou au deuxième arbre (20a, 20b) et configuré de manière à supporter la bague de synchronisation (100);
un manchon (104) configuré de manière à agencer le moyeu (102) de telle sorte qu'il soit mobile sur le premier arbre (12) ou sur le deuxième arbre (20a, 20b) présentant le moyeu (102) fixé à celui-ci dans une direction axiale; et
un mécanisme mobile (106) configuré de manière à déplacer le manchon (104) dans la direction axiale, et
la bague de synchronisation (100) est disposée de manière à faire saillie en direction du manchon (104) et comporte une denture (110) capable de s'engager avec une cannelure (104) formée sur le manchon (104) sous l'effet du déplacement du manchon dans la direction axiale,
**caractérisé en ce qu'**au moins un des engrenages (52, 54, 56, 58, 22, 24, 26, 28, 42, 44) qui constituent les paires d'engrenages peut être mis en rotation par un couple d'alimentation externe lorsque le véhicule est à l'arrêt, de telle sorte que, lorsque des phases de dents de la cannelure (104) du manchon (104) et de la bague de synchronisation (100) sont alignées et par conséquent sont dans l'incapacité de s'engager mutuellement, ledit au moins un des engrenages (52, 54, 56, 58, 22, 24, 26, 28, 42, 44) est mis en rotation par le couple d'alimentation externe de manière à permettre un engagement mutuel de la cannelure (104) et des dents (110) de la bague de synchronisation (100).

2. Appareil de transmission automatique selon la revendication 1, dans lequel la cannelure comprend:
une pluralité de dents hautes (108a) et une pluralité de dents basses (108b) présentant une hauteur inférieure à celle des dents hautes, et
la denture comprend:
des dents avant d'embrayage (110a) comprenant le même nombre de dents que les dents hautes et présentant un diamètre extérieur plus grand qu'un diamètre intérieur des dents hautes et plus petit qu'un diamètre intérieur des dents basses, et
des dents arrière d'embrayage (110b) capables de s'engager avec des rainures de dent sur la cannelure et formées à des positions en retrait des dents avant d'embrayage dans la direction s'éloignant du moyeu.

3. Appareil de transmission automatique selon la revendication 1 ou 2, dans lequel l'unité de commande d'engrenages commande le mécanisme mobile du mécanisme de commutation pour entraîner la cannelure et la denture à s'engager mutuellement selon une priorité prédéterminée à la condition que le véhicule satisfasse des conditions de parking prédéterminée.

4. Appareil de transmission automatique selon la revendication 3, dans lequel les conditions de parking prédéterminées consistent en ce que la cannelure et la denture restantes s'engagent mutuellement avec le préalable que le véhicule soit à l'arrêt avec la cannelure correspondant à la paire d'engrenages côté basse vitesse parmi les paires d'engrenages et la denture engagées l'une avec l'autre.

5. Appareil de transmission automatique selon la revendication 3 ou 4, dans lequel l'unité de commande d'engrenages règle l'état d'engagement en faisant tourner au moins un des engrenages qui constituent la paire d'engrenages configurée pour commuter l'état de transmission selon la priorité prédéterminée si l'engagement entre la cannelure et la denture n'est pas établi.
